# DEMANDE DE BREVET EUROPEEN

(11) **EP 2 039 564 A1**
(43) Date de publication de la demande: **25.03.2009**
(21) Numéro de dépôt: 08300250.1
(22) Date de dépôt: 31.07.2008
(51) Int. Cl.: B60N 3/00, B60R 7/06

(54) **Tablette amovible multifonctions pour planche de bord, planche de bord pour une telle tablette et véhicule automobile comprenant une telle planche de bord équipée d'au moins une telle tablette**

(30) Priorité: 20.09.2007 FR 0706604
(71) Demandeur: Renault, 92109 Boulogne Billancourt (FR)
(72) Inventeur: Mayeur, Gerard, 76370, Ancourt (FR); Derrien, Bruno, 78990, Elancourt (FR)
(74) Mandataire: Guyon, Rodolphe C.

(57) **Abrégé**

La présente invention concerne une tablette (1) pour planche de bord (2) d'un véhicule automobile, comportant des moyens de montage (11) amovible sur ladite planche de bord.

Elle concerne également une planche de bord d'un véhicule automobile, comportant, à au moins un endroit, des moyens de réception (21, 31, 41) des moyens de montage d'une telle tablette.

Elle concerne enfin un véhicule automobile intégrant une telle planche de bord.

## Description

### DOMAINE TECHNIQUE AUQUEL SE RAPPORTE L'INVENTION

La présente invention concerne de manière générale l'aménagement de l'habitacle d'un véhicule automobile, et plus particulièrement de la planche de bord d'un tel véhicule.

La présente invention concerne en particulier une tablette multifonctions pour la planche de bord d'un véhicule automobile.

Elle concerne également une planche de bord pour une telle tablette et un véhicule automobile comprenant une telle planche de bord équipée d'au moins une telle tablette.

### ARRIERE-PLAN TECHNOLOGIQUE

Parmi les planches de bord déjà connues, certaines d'entre elles possèdent une boîte à gants dont le couvercle peut pivoter vers l'utilisateur et se bloquer, en porte-à-faux à partir de la planche de bord, dans une position sensiblement horizontale où ledit couvercle joue le rôle de tablette.

D'autres planches de bord connues disposent de tablettes coulissantes et/ou articulées à partir de la planche de bord.

Ainsi, les tablettes connues sont toutes montées de manière indémontable sur la planche de bord, de façon à faire partie intégrante de celle-ci.

Cependant, ces tablettes présentent de nombreux inconvénients. Elles ont une surface utile très réduite, et ne supportent que des poids très faibles (généralement inférieur à un kilogramme). Ces caractéristiques limitent fortement leur utilisation. Elles servent essentiellement de support à de petits objets légers, tels que des cartes routières, des stylos, des gobelets ou des lunettes.

De plus, l'utilisation de tablettes coulissantes et/ou articulées met en oeuvre des mécanismes de mise en place et d'escamotage complexes.

### OBJET DE L'INVENTION

Par rapport à l'Etat de la technique précité, la présente invention propose, en option pour la planche de bord, une tablette adaptée à être montée en différents endroits de la planche de bord, afin de remplir différentes fonctions dont au moins une fonction de table pour écrire, pour poser un ordinateur ou pour manger.

Plus particulièrement, selon l'invention, la tablette pour planche de bord d'un véhicule automobile comporte des moyens de montage sur ladite planche de bord, adaptés à désolidariser entièrement la tablette de la planche de bord, caractérisée en ce que lesdits moyens de montage autorisent le montage de ladite tablette dans une position de couvercle fermant un renfoncement de ladite planche de bord.

Selon une première caractéristique avantageuse de la tablette, les moyens de montage sur ladite planche de bord sont adaptés à un montage en porte-à-faux de la tablette dans une position de table.

La tablette peut alors avantageusement être utilisée comme table.

Selon une autre caractéristique avantageuse de la tablette, les moyens de montage sur ladite planche de bord autorisent un déplacement de la tablette par rapport à ladite planche de bord.

Ce déplacement peut par exemple être un mouvement de pivotement ou de glissement adapté à une utilisation de la tablette en tant que couvercle dans la planche de bord.

Selon une caractéristique avantageuse, les moyens de montage sur ladite planche de bord autorisent un pivotement de la tablette par rapport à ladite planche de bord de ladite position de couvercle fermant un renfoncement de ladite planche de bord vers ladite position de table.

Selon une autre caractéristique avantageuse de la tablette, les moyens de montage sur ladite planche de bord sont des moyens de montage fixe adaptés à fixer la tablette (1) par rapport à ladite planche de bord (2).

Ces moyens de montage fixes sont adaptés, par exemple, à une utilisation de la tablette comme table.

On propose également selon l'invention, une planche de bord d'un véhicule automobile comportant une pluralité de moyens de réception des moyens de montage amovible d'une tablette dont au moins des premiers moyens de réception de ladite tablette dans une position de couvercle fermant un renfoncement de ladite planche de bord.

La tablette peut ainsi être montée à différents endroits de la planche de bord, et remplir différentes fonctions selon son positionnement.

Selon une première caractéristique avantageuse de la planche de bord, elle comporte au moins des deuxièmes moyens de réception adaptés à un montage en porte-à-faux de la tablette sur la planche de bord dans une position de table.

La planche de bord dispose ainsi au moins de moyens de réception adaptés à une utilisation de la tablette comme table.

Selon une autre caractéristique avantageuse de la planche de bord au moins lesdits premiers moyens de réception autorisent un déplacement de la tablette par rapport à la planche de bord.

Selon une autre caractéristique avantageuse de la planche de bord au moins lesdits deuxièmes moyens de réception sont adaptés à un montage fixe de la tablette par rapport à la planche de bord.

Un tel moyen de réception de la planche de bord est adapté à recevoir une tablette amovible pour remplir une fonction de table, par exemple.

On propose également selon l'invention, un véhicule automobile comprenant une telle planche de bord équipée d'une telle tablette.

### DESCRIPTION DETAILLEE D'UN EXEMPLE DE REALISATION

La description qui va suivre, en regard des dessins annexés, donnée à titre d'exemple non limitatif, fera bien comprendre en quoi consiste l'invention et comment elle peut être réalisée.

Sur les dessins annexés :
- la figure 1 est une vue éclatée en perspective d'une tablette selon l'invention, et d'une planche de bord selon l'invention.
- les figures 2 et 3 sont des vues en perspective de la tablette de la figure 1 utilisée en tant que couvercle sur la planche de bord de la figure 1, en position fermée (figure 2) et ouverte (figure 3).
- la figure 4 est une vue assemblée de la figure 1, la tablette étant montée en position de table.
- la figure 5 est une vue en perspective de la tablette de la figure 1 montée en position de desserte sous planche.

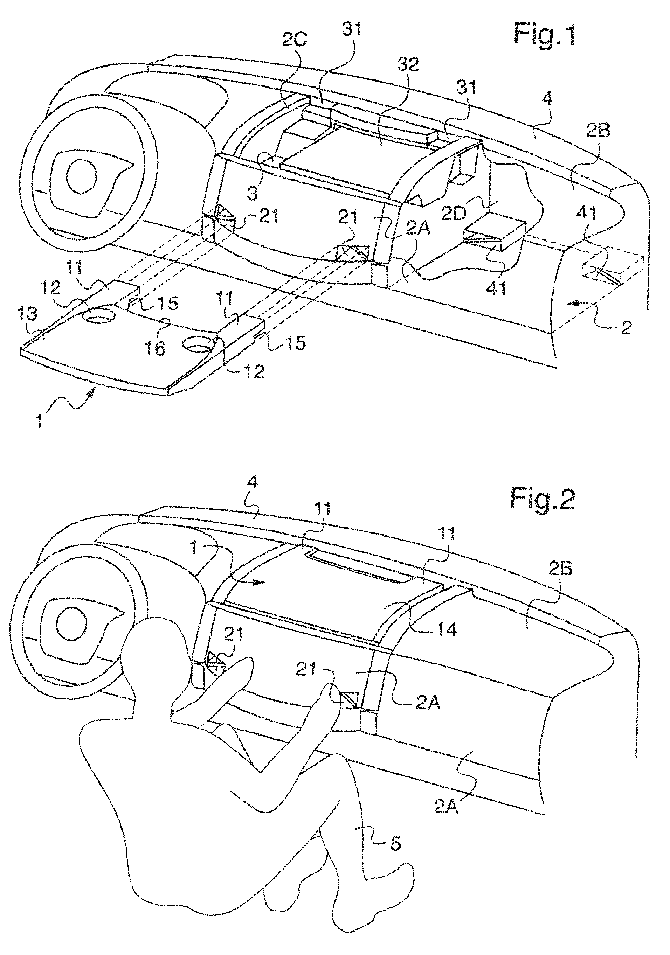

Sur les figures 1 à 5, on a représenté une tablette 1 et une planche de bord 2 selon l'invention, installées dans un véhicule automobile utilitaire, comportant trois places à l'avant.

La tablette 1 est représentée sur ces figures dans une position adaptée à une utilisation par le passager central 5 du véhicule utilitaire (voir les figures 2 à 4).

Cependant, la tablette 1 peut bien entendu être installée du côté du passager latéral.

La planche de bord 2 comporte une partie frontale 2A sensiblement verticale faisant face à l'utilisateur, une partie supérieure 2B sensiblement horizontale et une partie inférieure 2D, appelée dessous de planche 2D, située sous la partie frontale 2A. La partie supérieure 2B de la planche de bord 2 comporte une ouverture 2C donnant accès à un renfoncement 3 adapté à recevoir les effets personnels des passagers et, notamment, un ordinateur portable 32.

Avantageusement, la planche de bord 2 comporte ici trois moyens de réception adaptés à coopérer avec des moyens de montage amovible prévus sur la tablette 1.

Les moyens de réception comprennent ici des couples de logements 21, 31,41.

L'un des couples de logements 31, dits supérieurs, est situé au fond de la planche de bord 2 sur sa partie supérieure 2B, au niveau de la frise de désembuage 4, dans le renfoncement 3.

Un autre couple de logements 21, dits inférieurs, est situé sur la partie frontale 2A de la planche de bord 2.

Un troisième couple de logements 41, dit alternatifs, est situé en dessous de planche 2D de la planche de bord 2.

La tablette 1 présente sensiblement la forme d'un rectangle avec une découpe axiale 16 globalement rectangulaire qui débouche de manière centrée sur l'un des côtés longitudinaux de ladite tablette 1.

Ladite découpe axiale 16 forme sur le bord longitudinal de la tablette 1 deux pattes 11 d'emboîtement latérales identiques.

Les deux pattes 11 d'emboîtement sont adaptées à être insérées dans chaque couple de logements 21, 31 41 aménagés dans la planche de bord 2 et constituent ici les moyens de montage amovible de la tablette 1 sur la planche de bord 2.

La forme intérieure des logements 21, 31, 41 est adaptée à recevoir les pattes 11 d'emboîtement de la tablette 1, et à coopérer avec celles-ci afin de réaliser un emboîtement fixe ou mobile en pivotement ou en coulissement.

Les pattes 11 d'emboîtement font ici partie intégrante de la tablette 1, mais selon une variante non représentée, elles peuvent être rapportées sur celle-ci.

Comme le montrent les figures 1 et 2, la tablette 1 amovible comporte deux faces utiles opposées 13, 14. Une face 13 des faces utiles est plane, tandis que l'autre face 14 présente un profil courbe adapté au profil de la partie supérieure 2B de la planche de bord 2 au niveau de l'ouverture 2C.

La face 13 plane de la tablette 1 se prolonge sur les pattes 11 d'emboîtement, tandis que, le profil courbe de l'autre face 14 se raccorde par des décrochés 15 à la surface plane des pattes 11 d'emboîtement.

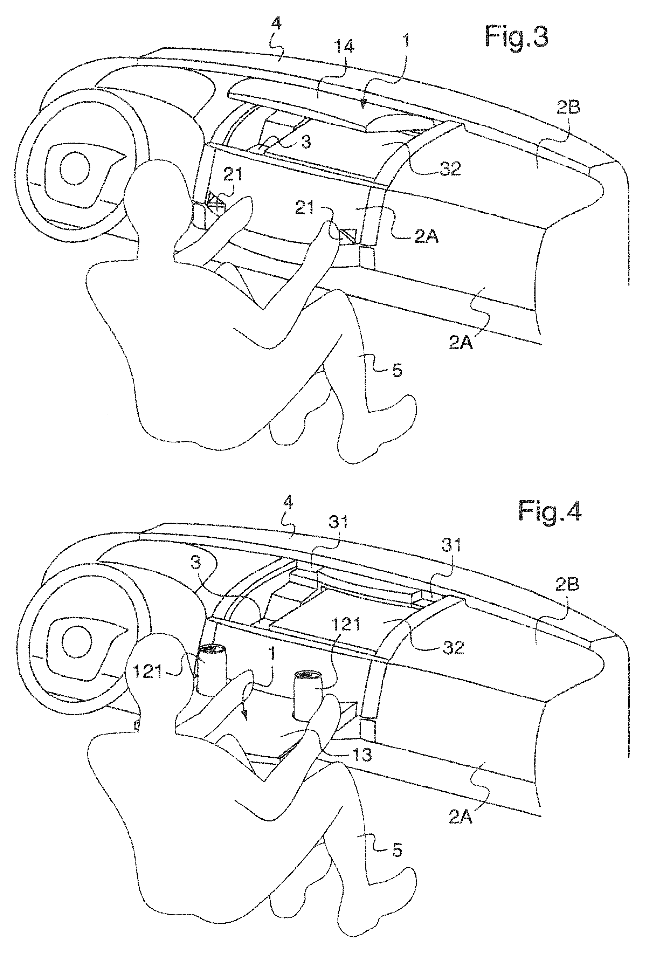

Dans une position d'utilisation représentée sur les figures 2 et 3, les pattes 11 d'emboîtement de la tablette 1 sont insérées dans le couple de logements 31 supérieurs de la planche de bord 2, de telle sorte que la tablette 1 amovible forme un couvercle au-dessus du renfoncement 3.

Dans cette position d'utilisation, la face 13 plane de la tablette 1 forme la face intérieure de la tablette 1, orientée vers l'intérieur du renfoncement 3 de la planche de bord 2, tandis que l'autre face 14 à profil courbe forme la face extérieure de la tablette 1, qui en position fermée du couvercle, s'étend dans la continuité de la face externe de la partie supérieure 2B de la planche de bord 2 (voir la figure 2).

En position de couvercle fermé, les quatre côtés latéraux de la tablette 1 sont en contact avec la planche de bord 2 et la tablette 1 repose au moins partiellement sur cette planche de bord 2.

Les décrochés 15 prévus entre la face 14 à profil courbe de la tablette 1 et les pattes 11 d'emboîtement ainsi que la géométrie intérieure des logements 31 supérieurs sont agencés de manière à permettre le pivotement de la tablette 1 autour d'un axe passant par le couple de logements 31 supérieurs.

Lorsque la tablette 1 est en position de couvercle ouvert, elle peut être désengagée du couple de logements 31 supérieurs par un mouvement de translation vers le passager.

Dans une autre position d'utilisation, la tablette 1 amovible peut être utilisée comme table, pour travailler, ou pour manger, comme cela est représenté par exemple sur la figure 4.

Ici, la tablette 1 est utilisée comme table, de préférence à l'arrêt du véhicule, car elle recouvre au moins en partie le levier de vitesse, et peut gêner la conduite du véhicule.

Dans cette autre position d'utilisation, les pattes 11 d'emboîtement de la tablette 1 sont insérées dans le couple de logements 21 inférieurs prévus sur la partie frontale 2A de la planche de bord 2, de telle sorte que la face 13 plane de la tablette 1 amovible est orientée vers le toit du véhicule et forme une surface sensiblement horizontale.

La géométrie intérieure des logements 21 inférieurs est adaptée à coopérer avec les décrochés 15 de la tablette 1 pour bloquer celle-ci par arc-boutement en porte-à-faux sur la planche de bord 2. La tablette 1 est alors dans une position fixe et stable, adaptée à son utilisation comme table (voir la figure 4).

Le couple de logements 21 inférieurs est situé sur la planche de bord 2 à une hauteur qui permet une utilisation ergonomique de la tablette 1 par le passager central 5.

Préférentiellement, comme le montre la figure 1, la tablette 1 amovible est aménagée avec des empreintes 12 circulaires adaptées à recevoir des gobelets 121 (voir la figure 4).

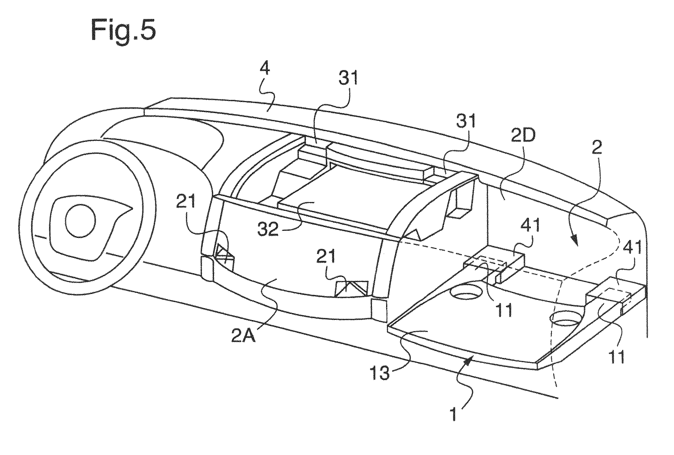

Enfin, selon une autre position d'utilisation, les pattes 11 d'emboîtement de la tablette 1 sont insérées dans un troisième couple de logements 41 situés en dessous de planche 2D, comme représenté sur la figure 5. Dans cette position, la tablette 1 est alors positionnée avec sa face 13 plane orientée vers le toit du véhicule.

Dans cette troisième position, la tablette 1 est bloquée par arc-boutement en porte-à-faux sur le dessous 2D de la partie frontale 2A de la planche de bord 2 et forme une desserte sous planche.

Cette tablette 1 est typiquement réalisée en matériau plastique (par exemple le polypropylène ou l'ABS). Elle peut éventuellement être renforcée par des inserts métalliques. Elle peut être personnalisée par différentes couleurs ou différents revêtements.

Elle présente typiquement une longueur de 450 millimètres, une largeur de 270 millimètres et une épaisseur moyenne d'environ 45 millimètres.

Ces dimensions sont avantageusement prévues pour accueillir un ordinateur portable lors d'une utilisation comme table de travail. La tablette 1 peut supporter un poids de quelques kilogrammes, et au maximum cinq ou six kilogrammes.

La tablette 1 remplit donc avantageusement trois fonctions différentes : une fonction couvercle, une fonction table et une fonction de desserte sous planche.

Pour l'utilisateur, le passage de la fonction couvercle à la fonction table ou desserte sous planche se fait par les étapes suivantes:
- pivotement de la tablette 1 vers une position de couvercle ouvert,
- désengagement de la tablette 1 des logements 31 supérieurs,
- retournement axial de la tablette 1 afin qu'elle présente sa face 13 plane orientée vers le toit du véhicule,
- insertion de la tablette 1 dans les logements 21 inférieurs ou dans les logements 41 alternatifs.

Le passage des fonctions table ou desserte sous planche à la fonction couvercle se fait de manière similaire.

La présente invention n'est nullement limitée aux modes de réalisation décrits et représentés mais l'homme du métier saura y apporter toute variante conforme à son esprit.

D'autres couples de logements adaptés à recevoir les moyens de montage amovible de la tablette 1 amovible peuvent notamment être prévus. Différents moyens de montage de la tablette 1 et de réception de la planche de bord 2 peuvent également être choisis. Le nombre et la nature de ces moyens d'emboîtement, d'accrochage, d'encliquetage ou de glissement, par exemple, peut varier, et l'on peut envisager de nombreuses combinaisons de ces moyens.

## Revendications

1. Tablette (1) pour planche de bord (2) d'un véhicule automobile, comportant des moyens de montage (11) sur ladite planche de bord (2), adaptés à désolidariser entièrement la tablette (1) de la planche de bord (2), **caractérisée en ce que** lesdits moyens de montage (11) autorisent le montage de ladite tablette (1) dans une position de couvercle fermant un renfoncement (3) de ladite planche de bord (2).

2. Tablette (1) selon la revendication précédente, dans laquelle les moyens de montage (11) sur ladite planche de bord (2) sont adaptés à un montage en porte-à-faux de la tablette (1) dans une position de table.

3. Tablette (1) selon l'une des revendications précédentes, dans laquelle les moyens de montage (11) sur ladite planche de bord (2) autorisent un déplacement de la tablette (1) par rapport à ladite planche de bord (2).

4. Tablette (1) selon la revendication 3, dans laquelle les moyens de montage (11) sur ladite planche de bord (2) autorisent un pivotement de la tablette (1) par rapport à ladite planche de bord (2) de ladite position de couvercle fermant un renfoncement de ladite planche de bord vers la position de table.

5. Tablette (1) selon la revendication 2, dans laquelle les moyens de montage (11) sur ladite planche de bord (2) sont des moyens de montage fixe adaptés à fixer la tablette (1) par rapport à ladite planche de bord (2).

6. Planche de bord (2) d'un véhicule automobile comportant une pluralité de moyens de réception (21, 31, 41) des moyens de montage (11) amovible d'une tablette (1) dont au moins des premiers moyens de réception (31) de ladite tablette (1) dans une position de couvercle fermant un renfoncement (3) de ladite planche de bord (2).

7. Planche de bord (2) selon la revendication 6, comportant au moins des deuxièmes moyens de réception (21, 41) adaptés à un montage en porte-à-faux de la tablette (1) sur la planche de bord (2) dans une position de table.

8. Planche de bord (2) selon l'une des revendications 6 ou 7, dans laquelle au moins lesdits premiers moyens de réception (31) autorisent un déplacement de la tablette (1) par rapport à la planche de bord (2).

9. Planche de bord (2) selon l'une des revendications 5 à 8, dans laquelle au moins lesdits deuxièmes moyens de réception (21, 41) sont adaptés à un montage fixe de la tablette (1) par rapport à la planche de bord (2).

10. Véhicule automobile comprenant une planche de bord (2) selon l'une des revendications 6 à 9, équipée d'une tablette (1) selon l'une des revendications 1 à 5.
